# FASCICULE DE BREVET EUROPEEN

(11) **EP 1 581 750 B1**
(45) Date de publication et mention de la délivrance du brevet: **03.11.2010**
(21) Numéro de dépôt: 03815699.8
(22) Date de dépôt: 24.12.2003
(51) Int. Cl.: F16B 37/04, F16B 21/09, F16B 39/10

(54) **DISPOSITIF DE FIXATION POUR LE MONTAGE D ELEMENTS DANS UN ESPACE RESTREINT**
BEFESTIGUNGSVORRICHTUNG ZUR MONTAGE VON ELEMENTEN IN EINEM EINGESCHRÄNKTEN RAUM
FIXING DEVICE FOR THE ASSEMBLY OF ELEMENTS IN A RESTRICTED SPACE

(30) Priorité: 08.01.2003 FR 0300149
(43) Date de publication de la demande: 05.10.2005
(73) Titulaire: Panhard Général Défense, 75013 Paris (FR)
(72) Inventeur: MONS, Christian, F-75015 Paris (FR); DUCLOS, Jean-Christophe, F- 42130 Arthun (FR)
(74) Mandataire: Pichat, Thierry
(86) Numéro de dépôt international: PCT/FR2003/003899
(87) Numéro de publication internationale: WO 2004/070217

(56) Documents cités:
- EP-A- 1 039 154
- DE-A- 4 444 413
- DE-U- 20 012 600
- US-A- 1 732 993
- US-A- 3 450 427

## Description

La présente invention concerne un dispositif de fixation pour le montage d'éléments ou d'accessoires dans un espace restreint.

Elle s'applique notamment, mais non exclusivement à la fixation d'accessoires à l'intérieur ou l'extérieur d'installations et équipements fixes ou mobiles, tels que les véhicules utilitaires qu'ils soient terrestres, maritimes ou aériens.

Dans ce contexte, US-A-4 850 063 divulgue un dispositif de fixation d'éléments comprenant un rail pourvu d'une paroi supérieure et de parois latérales. La paroi supérieure présente des lumières comprenant chacune une première partie permettant.le passage d'une tête de vis, ou de rivet, de fixation d'élément, et une seconde partie plus étroite, permettant le passage par coulissement d'une tige de vis, ou de rivet, de fixation, et dont les bords sont adaptés à servir d'appui à la tête de vis, ou de rivet, lors d'un serrage de celle-ci, la tête de vis, ou de rivet, étant alors logée entre les parois latérales du rail.

Habituellement, lorsque la paroi sur laquelle on doit fixer des éléments ne présente pas une solidité ou une rigidité suffisante, on rapporte un bâti adapté aux éléments à fixer. Un tel bâti s'avère lourd, encombrant et non versatile dans la mesure où il est adapté spécifiquement aux éléments à fixer pour lesquels il a été conçu.

La présente invention a pour but de supprimer ces inconvénients. Cet objectif est atteint notamment par la prévision d'un dispositif de fixation d'éléments élaboré sur la base de ce qui est indiqué ci-dessus en référence à US-A-4 850 063 et caractérisé comme mentionné en revendication 1.

Lorsque cette paroi est renforcée ou blindée, il est très difficile d'y fixer des éléments sans affecter sa solidité. En effet, on ne peut pas effectuer de soudure sur de l'acier blindé sans affecter sa résistance.

Selon une particularité de l'invention, la largeur de la première partie des lumières est sensiblement égale à la distance entre les parois latérales du rail.

Avantageusement, la distance entre les parois latérales du rail est légèrement supérieure à la largeur de la tête d'une vis standard, de forme hexagonale ou carrée, pour que la vis standard dont la tête est introduite dans le rail par la lumière soit bloquée en rotation entre les parois latérales du rail.

De préférence, le rail présente un profil de forme rectangulaire avec une paroi inférieure.

Selon une autre particularité de l'invention, la paroi inférieure du rail présente des perçages pour le passage de moyens de fixation pour la fixation du rail, ces perçages étant formés sensiblement à l'aplomb du centre de la première partie des lumières.

Selon encore une autre particularité de l'invention, l'espacement entre les parois supérieure et inférieure du rail est légèrement supérieur au cumul de la hauteur d'une tête de moyen de fixation du rail et de la hauteur d'une tête de vis de fixation utilisées pour fixer des éléments.

Selon une variante de réalisation de l'invention, le rail présente un profil en forme de U.

Avantageusement, le profil en U du rail est localement refermé par des pattes de fixation espacées le long du rail, munies chacune d'au moins un perçage pour le passage de moyens de fixation du rail.

Un mode de réalisation préféré de l'invention sera décrit ci-après, à titre d'exemple non limitatif, avec référence aux dessins annexés dans lesquels :
La figure 1 représente schématiquement une vue de dessus du dispositif de fixation selon l'invention ;
La figure 2 montre en coupe transversale le dispositif de fixation représenté sur la figure 1 ;
La figure 3 montre en coupe transversale une variante du dispositif représenté sur la figure 1.

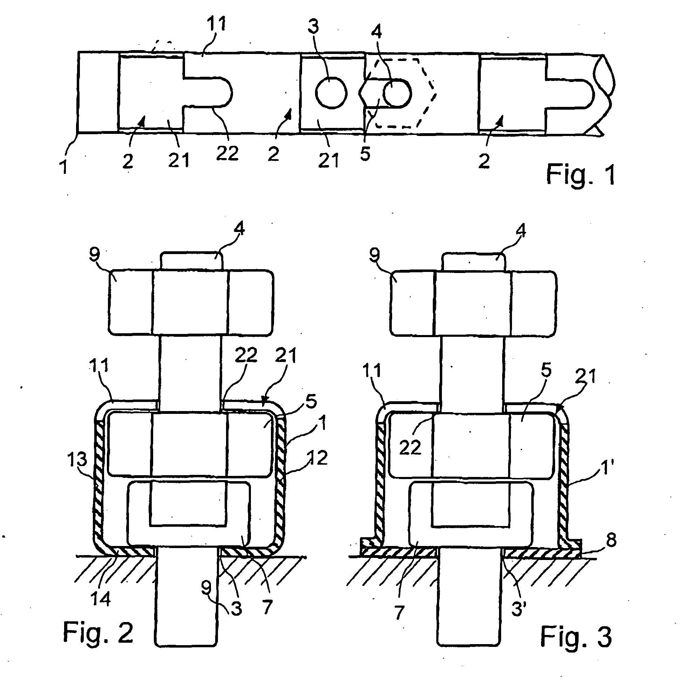

Sur les figures 1 et 2, le dispositif de fixation selon l'invention comprend un rail de fixation 1 comprenant une paroi supérieure 11 et des parois latérales 12, 13. La paroi supérieure 11 présente des lumières 2 de fixation régulièrement espacées pour la fixation d'éléments ou d'accessoires. Chacune de ces lumières 2 présente une partie 21 par exemple de forme rectangulaire permettant le passage d'une tête 5 de vis pour la fixation d'un accessoire, prolongée suivant l'axe du rail par une partie plus étroite 22, par exemple de forme oblongue, disposée de manière à permettre le passage de la tige 4 de la vis en dehors du rail, par coulissement suivant l'axe du rail, une fois que l'on a engagé la tête de la vis entre les parois latérales du rail par la partie rectangulaire 21 de la lumière 2. Dans cette position, la vis peut être utilisée pour fixer un élément à l'aide d'un écrou 9 engagé sur la vis par l'extrémité de la tige 4, les bords de la partie plus étroite 22 servant d'appui de la tête 5 de la vis lors du serrage de celle-ci.

Avantageusement, la largeur de la partie rectangulaire 21 des lumières 2 est sensiblement égale à la distance entre les parois latérales 12, 13 du rail, de sorte que l'on peut engager dans les lumières 2 des vis dont la tête présente une forme hexagonale ou carrée dont la largeur est légèrement inférieure à la distance entre les parois latérales du rail.
De cette manière, lorsque l'on serre un écrou 9 sur la vis 4, la tête 5 de la vis est bloquée en rotation entre les parois latérales 12, 13 du rail.

La largeur du rail et donc de la partie rectangulaire 21 des lumières est avantageusement choisie de manière à correspondre à celle due têtes de vis standard.

L'espacement des lumières 2 le long du rail est fixé en fonction du niveau de résistance souhaité du rail. A ce sujet, il est à noter que la longueur de la partie 21 des lumières 2 peut être plus réduite que la largeur des têtes 5 de vis 4 qui peuvent être introduites dans le rail inclinées suivant l'axe du rail. De cette manière, avec des vis de 8 mm à tête hexagonale, le pas entre deux lumières 2 peut être réduit à 34 mm sans affecter la résistance du rail.

Dans le mode de réalisation représenté sur les figures 1 et 2, le rail 1 présente un profil de forme rectangulaire avec une paroi inférieure 14. Dans ce cas, le rail peut être fixé à l'aide de moyens de fixation que l'on engage dans des perçages 3 prévus dans la paroi inférieure 14 du rail, sensiblement à l'aplomb du centre des parties rectangulaires 21 des lumières 2. Comme moyen de fixation du rail, on peut utiliser des vis 7, par exemple à tête ronde et à six pans creux, ou des rivets. Pour renforcer la fixation du rail, on peut également utiliser une rondelle dans laquelle on engage la vis 7 avant de l'insérer dans le perçage 3.

Pour que les lumières 2 utilisées pour le passage des moyens de fixation du rail soient également utilisables pour la fixation d'éléments ou d'accessoires, la hauteur du rail est de préférence légèrement supérieure au cumul de la hauteur de la tête des moyens de fixation (vis 7) du rail et de la hauteur des têtes 5 de vis de fixation utilisées pour fixer des éléments (figure 2).

Dans le mode de réalisation représenté sur la figure 3, le rail 1' présente un profil en forme de U, c'est-à-dire sans paroi inférieure. Dans ce cas, on soude des entretoises 8 de fixation, régulièrement réparties le long du rail, de manière à fermer localement le profil en U du rail, ces entretoises présentant un perçage central 3' pour le passage de moyens de fixation 7 du rail. Ces moyens de fixation peuvent également être constitués par des vis 7, par exemple à tête ronde et à six pans creux, ou des rivets.
Dans ce mode de réalisation, la hauteur du rail est également choisie légèrement supérieure au cumul de la hauteur des têtes 5 des vis utilisées pour la fixation d'éléments et des têtes des moyens de fixation du rail.

Les rails représentés sur les figures peuvent être fabriqués facilement par exemple à partir d'une tôle, par pliage, emboutissage ou roulage, après découpe.

Le rail représenté sur les figures 1 et 2 peut également être fabriqué à partir d'un tube qui est ensuite poinçonné. Dans le cas où il est fabriqué à partir d'une tôle qui est roulée, les bords de la tôle peuvent être soudés pour obtenir une plus grande résistance. Il peut également être fabriqué à partir d'une tôle pliée en U et d'une tôle inférieure de fermeture du profil qui est soudée sur le profil en U.

Le dispositif de fixation qui vient d'être décrit peut être utilisé sur des parois verticales, horizontales ou inclinées. Il permet d'obtenir une fixation fiable, sans risque de desserrage des vis, même dans un environnement fortement vibratoire. Il est donc particulièrement adapté à être utilisé dans des véhicules, notamment des habitacles blindés ou de charge structurelle faible, en leur procurant l'avantage de pouvoir supporter-dcs équipements qui n'avaient pas été prévus lors de leur conception.

## Revendications

1. Dispositif de fixation d'éléments, **caractérisé en ce qu'**il comprend un rail (1, 1', 1") comprenant une paroi supérieure (11) et des parois latérales (12, 13), la paroi supérieure présentant des lumières (2) comprenant chacune une première partie (21) permettant le passage d'une tête (5) de vis, ou de rivet, de fixation d'élément, et une seconde partie (22) plus étroite, permettant le passage par coulissement d'une tige (4) de vis, ou de rivet, de fixation, et dont les bords sont adaptés à servir d'appui à la tête de vis, ou de rivet, lors d'un serrage de celle-ci, la tête de vis, ou de rivet, étant alors logée entre les parois latérales du rail, **caractérisé en ce que** :
- soit le rail (1) présente un profil de forme rectangulaire avec une paroi inférieure. (14) présentant des perçages (3) pour le passage de moyens de fixation (7) pour la fixation du rail,
- soit le rail (1', 1") présente un profil en forme de U localement refermé par des pattes de fixation (8) espacées le long du rail, munies chacune d'au moins un perçage (3') pour le passage de moyens (7, 17, 18) de fixation du rail,
- et lesdits perçages (3,3') sont formés sensiblement à l'aplomb du centre de la première partie (21) des lumières (2).

2. Dispositif de fixation selon la revendication 1, **caractérisé en ce que** la largeur de la première partie (21) des lumières (2) est sensiblement égale à la distance entre les parois latérales (12, 13) du rail.

3. Ensemble pour la fixation d'éléments à une paroi blindée, l'ensemble comprenant :
- le dispositif de fixation selon l'une des revendications précédentes,
- au moins une dite vis, ou rivet, (4,5) de fixation logé(e) entre les parois latérales du rail,
- et lesdits moyens (7) de fixation du rail engagés avec la paroi blindée à travers lesdits perçages (3,3').

4. Ensemble selon la revendication 3, **caractérisé en ce que** la distance entre les parois latérales (12, 13) du rail est juste supérieure à la largeur de la tête (5) d'une dite vis (4), choisie standard et à tête de forme hexagonale ou carrée, pour que cette vis standard dont la tête est introduite dans le rail par la lumière (2) correspondante soit bloquée en rotation entre les parois latérales du rail.

5. Ensemble selon la revendication 3 ou 4, **caractérisé en ce que** l'espacement entre la paroi supérieure (11) et, soit la paroi inférieure (14), soit la patte de fixation (8) correspondante du rail (1), est juste supérieur au cumul :
- de la hauteur d'une tête dont sont pourvus individuellement lesdits moyens (7) de fixation du rail,
- et de la hauteur d'une tête (5) de la, ou de l'une desdites, vis, ou rivet, de fixation d'éléments,
chaque moyen (7) de fixation et vis, ou rivet, se faisant face dans le rail où ils sont engagés se bloquant alors mutuellement.

## Claims

1. Device for fixing items, **characterised in that** it includes a rail (1, 1', 1") including an upper wall (11) and side walls (12, and 13), the upper wall having apertures (2) each including a first part (21) enabling the passage of a screw head (5) or rivet, for fixing an item, and a second narrower part (22), allowing the passage, by sliding, of a shank (4) of screw, or rivet, for fixing, the edges of which are adapted to serve as a support to the head of screw, or rivet, when tightening the latter, the head of screw, or rivet, being then lodged between the side walls of the rail, **characterised by** the following:
- either the rail (1) has a profile of rectangular shape with a lower wall (14) with perforations (3) for passing the fixing devices (7) for fixing the rail,
- or the rail (1', 1") has a profile in U shape locally closed by fixing lugs (8) spaced along the rail, each equipped with at least one perforation (3') for passing the rail fixing devices (7, 17, 18),
- and the said perforations (3, 3') are formed approximately perpendicular to the centre of the first part (21) of the apertures (2).

2. Fixing device in accordance with claim 1, **characterised in that** the width of the first part (21) of the apertures (2) is approximately equal to the distance between the side walls (12, 13) of the rail.

3. Assembly for fixing of items to a closed wall, the assembly including:
- the fixing device in accordance with one of the preceding claims,
- at least one of the said screws or rivets, (4, 5) for fixing, lodged between the lateral walls of the rail;
- and the said fixing devices (7) of the rail engaged with the closed wall via the said perforations (3, 3').

4. Assembly in accordance with claim 3, **characterised in that** the distance between the lateral walls (12, 13) of the rail is slightly greater than the width of the head (5) of one of the said screws (4), chosen standard and with hexagonal or square shaped head, so that this standard screw the head of which is introduced into the rail by the corresponding aperture (2) has its rotation blocked between the lateral walls of the rail.

5. Assembly as per claim 3 or 4, **characterised in that** the space between the upper wall (11) and, either the lower wall (14), or the corresponding fixing lug (8) of the rail (1) is slightly greater than the total of the following:
- the height of one head of one of the said rail fixing devices (7),
- plus the height of a head (5) of the screw, or of one of the said screws or rivets, for fixing items,
each fixing device (7) and screw, or rivet, being opposite to each other in the rail where they are engaged, thus interlocking with each other.

## Patentansprüche

1. Vorrichtung zum Befestigen von Elementen, **dadurch gekennzeichnet, dass** sie eine Schiene (1, 1', 1") mit einer oberen Wand (11) und Seitenwänden (12, 13) aufweist, wobei die obere Wand Öffnungen (2) aufweist, die jeweils einen ersten Abschnitt (21) zum Durchführen eines Schrauben- bzw. Nietenkopfes (5) zur Elementbefestigung und einen schmäleren zweiten Abschnitt (22) zum Durchschieben eines Befestigungsschrauben- bzw. Nietenschafts (4) enthalten und deren Kanten so ausgebildet sind, dass sie als Abstützung für den Schrauben- bzw. Nietenkopf beim Anziehen desselben dienen, wobei der Schrauben- bzw. Nietenkopf dann zwischen den Seitenwänden der Schiene aufgenommen wird, **dadurch gekennzeichnet, dass**:
- die Schiene (1) entweder ein rechteckförmiges Profil mit einer unteren Wand (14) aufweist, die Bohrungen (3) zum Durchführen von Befestigungsmitteln (7) zum Befestigen der Schiene enthält,
- oder die Schiene (1, 1") ein U-förmiges Profil aufweist, das bereichsweise mit entlang der Schiene beabstandeten Befestigungslaschen (8) verschlossen ist, die jeweils mit zumindest einer Bohrung (3') zum Durchführen der Schienenbefestigungsmittel (7, 17, 18) versehen sind,
- die Bohrungen (3, 3') im wesentlichen lotrecht zum Mittelpunkt des ersten Abschnitts (21) der Öffnungen ausgebildet sind.

2. Befestigungsvorrichtung nach Anspruch 1, **dadurch gekennzeichnet, dass** die Breite des ersten Abschnitts (21) der Öffnungen (2) im wesentlichen gleich dem Abstand zwischen den Seitenwänden (12, 13) der Schiene ist.

3. Anordnung zum Befestigen von Elementen an einer Panzerwand, wobei die Anordnung aufweist:
- die Befestigungsvorrichtung nach einem der vorangehenden Ansprüche,
- zumindest eine Befestigungsschraube bzw. -niete (4, 5), die zwischen den Seitenwänden der Schiene aufgenommen ist,
- die Schienenbefestigungsmittel (7), die durch die Bohrungen (3, 3') mit der Panzerwand in Eingriff stehen.

4. Anordnung nach Anspruch 3, **dadurch gekennzeichnet, dass** der Abstand zwischen den Seitenwänden (12, 13) der Schiene gerade größer als die Breite des Kopfes (5) einer Schraube (4) ist, die standardmäßig und mit sechskant- bzw. vierkantförmigem Kopf gewählt ist, damit diese Standardschraube, die mit ihrem Kopf durch die entsprechende Öffnung (2) in die Schiene eingeführt wird, zwischen den Seitenwänden der Schiene drehfest gesichert wird.

5. Anordnung nach Anspruch 3 oder 4, **dadurch gekennzeichnet, dass** der Raum zwischen der oberen Wand (11) und entweder der unteren Wand (14) oder der entsprechenden Befestigungslasche (8) der Schiene (1) gerade größer ist als die Summe aus:
- der Höhe eines Kopfes, mit dem die einzelnen Schienenbefestigungsmittel (7) versehen sind,
- und der Höhe eines Kopfes (5) der bzw. einer der Elementbefestigungsschrauben bzw. -nieten,
wobei jedes Befestigungsmittel (7) und jede Schraube bzw. Niete, die in der Schiene, in der sie eingreifen, einander gegenüberliegen, sich gegenseitig sichern.
